# EUROPÄISCHE PATENTSCHRIFT

(11) **EP 1 565 358 B1**
(45) Veröffentlichungstag und Bekanntmachung des Hinweises auf die Patenterteilung: **22.11.2006**
(21) Anmeldenummer: 03740041.3
(22) Anmeldetag: 27.05.2003
(51) Int. Cl.: B60S 1/04

(54) **WISCHERANLAGE**
WIPER UNIT
SYSTEME D'ESSUIE-GLACE

(30) Priorität: 25.10.2002 DE 10249721
(43) Veröffentlichungstag der Anmeldung: 24.08.2005
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2003/001716
(87) Internationale Veröffentlichungsnummer: WO 2004/039644

(56) Entgegenhaltungen:
- WO-A-02/38425
- FR-A- 2 724 892
- US-B1- 6 353 991
- PATENT ABSTRACTS OF JAPAN vol. 2002, no. 10, 10. Oktober 2002 (2002-10-10) -& JP 2002 178880 A (ASMO CO LTD), 26. Juni 2002 (2002-06-26)
- PATENT ABSTRACTS OF JAPAN vol. 2002, no. 11, 6. November 2002 (2002-11-06) -& JP 2002 193076 A (ASMO CO LTD), 10. Juli 2002 (2002-07-10)

## Beschreibung

### Stand der Technik

Die Erfindung betrifft eine Wischeranlage, insbesondere für Kraftfahrzeuge, nach der Gattung des unabhängigen Anspruchs.

Mit der DE 29 20 899 C2 ist eine Wischeranlage bekannt geworden, bei der in das Hohlprofil eines Trägerrohrs Ansätze des Lagergehäuses eingeschoben werden. Die Ansätze liegen wenigstens teilweise an den Wandungen des Trägerrohrs an und weisen wenigstens eine Ansparung auf, in die Abschnitte des Trägerrohrs eingedrückt sind, um eine formschlüssige Verbindung zwischen dem Trägerrohr und dem Ansatz zu bilden. Durch die Aussparung wird das Wischerlager nicht nur axial zum Ansatz gesichert, sondern im Falle eines runden Querschnitts auch gegen verdrehen im Trägerrohr. Wird das Trägerrohr aus einem Vierkantrohr oder einem Rohrprofil mit einem sonstigem unrunden Querschnitt hergestellt, ist die Position des Wischerlagers bereits vor der Montage durch das jeweilige Profil festgelegt. Bei einem kreiszylindrischen Rohrprofil dagegen lässt sich die Position noch bei der Montage bestimmen.

Mit der gattungsgemässen FR-A-2 724 892 ist ein Wischerlagergehäuse bekannt geworden, an dem ein Zapfen angeformt ist, der in ein Trägerrohr mit einem kreisförmigen Rohrprofil greift. Der Zapfen ist als Hohlprofil ausgebildet, wobei zur Verbindung mit dem Trägerrohr ein Sicherungsstift durch Bohrungen in dem Trägerrohr und in dem Zapfen eingefügt wird.

Bei obiger Ausführung ist der Ansatz aus Vollmaterial gefertigt. Weiterhin ist auch bekannt, den Ansatz aufgrund von Kostenreduktion aus Kunststoff zu fertigen, wobei hier zur Befestigung des Ansatzes im Trägerrohr mittels des Crimpverfahrens der Ansatz ein entsprechendes Stegprofil aufweist. Eine solche Ausführung kann jedoch die Anforderung an die Biegesteifigkeit des Wischeranlagegehäuses nur beschränkt erfüllen.

### Vorteile der Erfindung

Die erfindungsgemäße Vorrichtung mit den Merkmalen des unabhängigen Anspruchs hat den Vorteil, dass auch bei der Verwendung eines unverstärkten kostengünstigen Werkstoffes der Zapfen (Ansatz) so biegesteif gefertigt werden kann, dass er die auftretenden Kräfte beim Wischerbetrieb aufnehmen kann. Hierzu ist der Querschnitt des Zapfens als geschlossenes Hohlprofil ausgebildet, das eine deutlich höhere Biegefestigkeit aufweist, als ein offenes Stegprofil. Ein solches Hohlprofil kann beispielsweise mittels Spritzguss-Verfahren einfach und kostengünstig hergestellt werden.

Durch die in den Unteransprüchen angegebenen Maßnahmen sind vorteilhafte Weiterbildungen der Vorrichtung nach dem unabhängigem Anspruch möglich. So ist durch das Anformen von Aussparungen an der Oberfläche des Zapfens ein Materialumform-Verfahren anwendbar, mit dem der Zapfen formschlüssig im Rohrprofil befestigt werden kann. Dabei wird der Zapfen sowohl axial, als bei einem runden Rohrprofil auch gegen verdrehen gesichert. Der Zapfen kann noch nach dem Einstecken in das Rohrprofil positioniert und anschließend beispielsweise mittels Vercrimpen fixiert werden.

Weist das Hohlprofil des Zapfens in etwa ein kreisförmigen Querschnitt auf, kann der Zapfen über den gesamten Umfang gleich hohe radiale Kräfte aufnehmen. Außerdem ist ein rundes Innenprofil des Hohlprofils sowohl für dessen Herstellung, als auch für das Einfügen eines Verstärkungsrohres sehr günstig.

Bei einer alternativen Ausführungsform weist das Hohlprofil einen vorzugsweise rechteckigen Querschnitt auf, wodurch in einer bestimmten Vorzugsrichtung höhere Kräfte aufgenommen werden können.

Sind innerhalb des Hohlprofils weitere Stege angeordnet, können insbesondere bei der Materialumformung zur Befestigung am Trägerrohr höhere radiale Umformkräfte angewendet werden.

Durch die Verwendung von unverstärktem Kunststoff für das gesamte Wischerlagergehäuse kann dieses Teil sehr kostengünstig im Spritzguss-Verfahren hergestellt werden. Insbesondere bei der Verwendung von POM kann dabei eine gute direkte Lagerung der Wischer geschaffen werden, die auch bei extremen Temperaturen (bis - 40°C) und bei hoher Reibebelastung eine lange Lebensdauer aufweist.

Werden insbesondere die beiden längeren parallelen Seiten des Hohlprofils parallel zur Wischerlagerachse ausgerichtet, werden die erhöhten Kräfte die im Umkehrbereich auf die Wischer wirken besonders gut abgefangen, wodurch gewährleistet ist, dass der Wischwinkelbereich auch bei veränderlichen äußeren Bedienungen, wie beispielsweise Wischergeschwindigkeit, Fahrzeugsgeschwindigkeit oder Reibung auf der Scheibe, relativ konstant bleibt.

In einem weiterem Ausführungsbeispiel wird in das Hohlprofil des Zapfens ein Verstärkungselement, insbesondere im Übergangsbereich zwischen Lagergehäuse und Träge eingelegt, wodurch die Biegesteifigkeit der Verbindung zwischen dem Wischerlagergehäuse und dem Träger zusätzlich erhöht wird. Dadurch kann ohne Änderung des Hohlprofils für Anwendung mit erhöhter Krafteinwirkung mit lediglich einem zusätzlichen Bauteil die Stabilität des Zapfens individuell - beispielweise lediglich im Wischerlagegehäuse auf der Fahrerseite - erhöht werden.

Besonders vorteilhaft ist es dabei, das Verstärkungselement lediglich lose in den Zapfen einzuschieben, und die Fixierung des Verstärkungselements in einem Arbeitsgang mit der Materialumformung des Rohrprofils zu dessen Befestigung am Zapfen auszuführen. Durch die Verformung des äußeren Rohrprofils des Trägers wird auch das Hohlprofil des Zapfens derart verformt, dass das innenliegende Verstärkungselement sowohl gegen ein Verdrehen als auch axial gesichert ist.

Soll eine Wischeranlage für auftretende Kräfte verschiedener Stärke ausgelegt werden, kann das Hohlprofil des Zapfens unterschiedliche Querschnittsformen aufweisen, ohne dass sich hierbei die Oberflächenstruktur des Zapfens verändert. Dadurch können unterschiedlich stabile Ausführungsformen des Wischerlagergehäuses bei gleichbleibendem Materialumform-Verfahren im Träger der Wischeranlage montiert werden. Dadurch wird ein kostengünstiges Baukastensystem geschaffen.

### Zeichnung

In der Zeichnung sind verschiedene Ausführungsbeispiele einer erfindungsgemäßen Vorrichtung dargestellt und in der nachfolgenden Beschreibung näher erläutert. Es zeigen
Figur 1 eine erfindungsgemäße Wischeranlage,
Figur 2 einen Zapfen nach dem Stand der Technik gemäß eines Schnitts nach II/II,
Figur 3 ein erfindungsgemäßes Wischerlagergehäuse mit dazugehörigem Querschnitt,
Figur 4a bis 4d Querschnitte von verschiedenen Ausführungsformen des Lagerzapfens,
Figur 5a bis 5c die Montage eines Verstärkungselement im Schnitt und
Figur 6a und 6b eine weitere Variation eines Lagergehäuses mit einem Querschnitt durch den Zapfen.

### Beschreibung

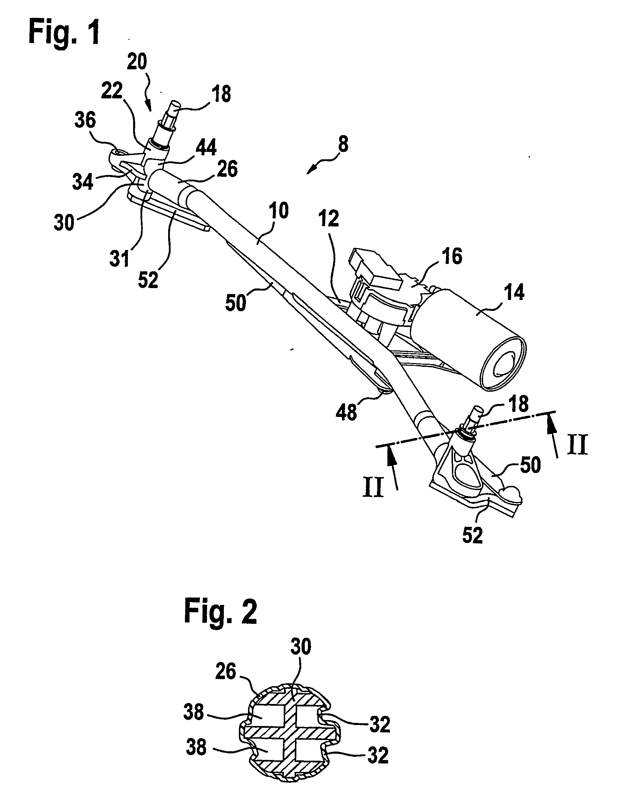

Figur 1 zeigt eine Wischeranlage 8 beispielsweise für die Frontscheibe eines Kraftfahrzeugs, mit einem Trägerrohr 10, das eine sogenannte Motorplatine 12 trägt. Auf dieser befindet sich ein Motor 14 mit einem daran angebauten Getriebe 16, dessen Abtriebswelle über eine Kurbel 48 und Gelenkstangen 50 weitere Kurbeln 52 antreibt, die jeweils mit einer Antriebswelle 18 für jeden (nicht dargestellten) Scheibenwischer fest verbunden sind. Die Antriebswellen 18 sind in Wischerlagem 20 gelagert, deren Lagergehäuse 22 Zapfen 30 aufweisen, die in die als Rohrprofil 26 ausgebildeten Enden des Trägers 10 gesteckt und darin fixiert sind. Der Querschnitt des Rohrprofils 26 kann dabei eine Kreisform, oder beispielsweise ein im wesentlichen quadratischen oder rechteckigen Querschnitt aufweisen, wodurch ein Formschluss in Umfangsrichtung hergestellt ist, der die Winkellage der Lagergehäuse 22 zur Motorplatine 12 festlegt. Das Wischerlagergehäuse 22 weist des weiteren ein Halteelement 36 zur Befestigung der Wischeranlage 8 am Kraftfahrzeug auf. Der Zapfen 30 weist an seiner der Antriebswelle 18 zugewanden Seite 31 eine vergrößerte Übergangsfläche 44 auf, die mit großen Radien in die Umfangsfläche des Lagergehäuses 22 übergeht, wodurch eine günstige Kraftübertragung erreicht wird. Diese kann durch seitliche Versteifungsrippen 34 noch unterstütz werden, die sich vom achsnahen Ende 31 des Zapfens 30 zum Halteelement 36 hin erstrecken.

In Figur 2 ist ein Querschnitt entsprechend dem Schnitt II/II in Figur 1 dargestellt, wobei in Figur 2 ein Zapfen 30 gemäß dem Stand der Technik abgebildet ist. Dieser weist einen Querschnitt mit verzweigten Stegen auf, zwischen deren offenen Enden Material des Rohrprofils 26 eingepresst ist. Je nach Umformwerkzeug werden Wandbereiche 32 des Rohrprofils 26 mehr oder weniger tief in Aussparungen 38 des Zapfens 30 vercrimpt.

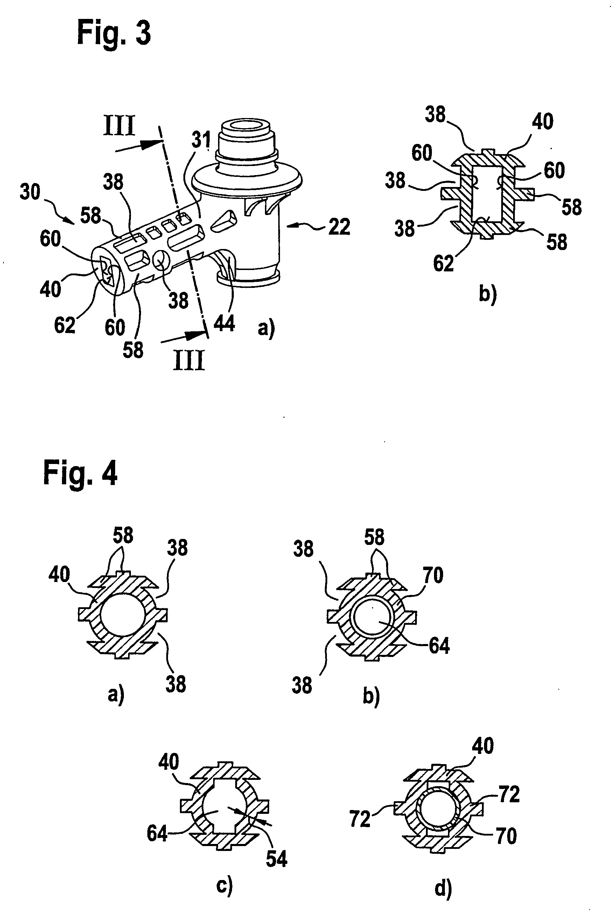

Figur 3 zeigt ein erfindungsgemäßes einteiliges Lagergehäuse 22, das beispielsweise aus POM, einem unverstärkten Kunststoff, gefertigt ist. Der Zapfen 30 weist hierbei ein Hohlprofil 40 auf, das an seiner Außenfläche äußere Stege 58 mit dazwischen liegenden Aussparung 38 aufweist, in die das Wandmaterial des Rohrprofils 26 gedrückt wird, um eine Verbindung mit dem Träger 20 herzustellen. Im Inneren ist das Hohlprofil 40 näherungsweise rechteckförmig, mit zwei längeren parallele Seitenwände 60 und zwei kürzeren parallel Seitenwänden 62. Hierbei sind die längern Seitenwände 60 parallel zur (in Figur 3 nicht dargestellten) Antriebswelle 18 ausgerichtet. Die Außenkontur des Zapfens 30 ist wie in Figur 2 über ihren Umfang kreisförmig ausgebildet und weist das selbe Muster von Aussparungen 38 auf, so dass für die Montage des Zapfens 30 im Trägerrohr 10 die gleiche Umformvorrichtung verwendet werden kann, wie für den Zapfen 30 in Figur 2.

In Figur 4a bis 4d sind weitere Variationen des Zapfens 30 mit näherungsweise kreisförmigem Hohlprofil 40 dargestellt. Der äußere Umfang des Hohlprofils 40 weist bei allen Varianten dieselbe Außenkontur mit den gleichen äußeren Stegen 58 und den korrespondierten Aussparung 38 auf, wodurch alle Ausführungsformen mit dem selben Umformwerkzeug mit dem Rohrprofil 26 verbunden werden können. Im Inneren weist das Hohlprofil 40 in Figur 4a einen etwa kreisförmigen Hohlraum 64 auf, in den in Figur 4b ein Verstärkungselement 70 eingelegt ist. In Figur 4c weist das Hohlprofil 40 als Querschnitt eine Kombination aus einem Rechteck und einem Kreis auf. Bei diesem Querschnitt wirken bei der Materialumformung des Rohrprofils 26 höhere radiale Kräfte auf das Einlegeteil 70 ein, da ein bestimmter Bereich 72 der Seitenwände des Hohlprofils 40 stärker verformt wird. Dadurch wird das Einlegeteil 70 innerhalb des Hohlprofils 40 eingeklemmt und somit gegen Verdrehen oder ein axiales Verschieben gesichert.

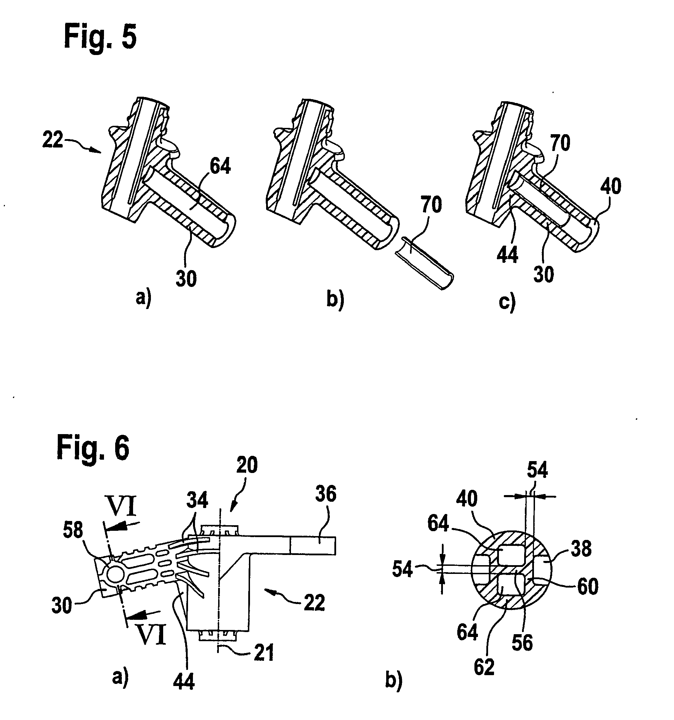

In Figur 5a bis 5c ist der Montageprozess des Versteifungselements 70 dargestellt. Das Wischerlagergehäuse 22 in Figur 5a mit einem kreisförmigen Hohlprofil 40 des Zapfens 30 kann sowohl ohne, als auch mit Versteifungselement 70 verwendet werden. Für Anwendungen, bei denen eine höhere Biegesteifigkeit erforderlich ist, wird in den Hohlraum 64 des Zapfens 30 beispielsweise ein hülsenförmiges Versteifungselement 70 eingeschoben, wie dies in Figur 5b dargestellt ist. Das Versteifungselement 70 kann dabei direkt eingepresst, oder aber lediglich lose eingeschoben werden, um danach beispielsweise beim Vercrimpen des Rohrprofils 26 zusammen mit den Zapfen 30 dreh- und verschiebefest gesichert zu werden. Durch die Lage des Versteifungselements 70 wird insbesondere der Übergangsbereich 44 verstärkt, an dem der Zapfen 30 aus dem Rohrprofil 26 austritt.

In einem weiteren Ausführungsbeispiel in Figur 6a und 6b weist das Wischerlagergehäuse 22 ein Halteelement 36 und gegenüberliegend - leicht gegen die Lagerachse geneigt - den Zapfen 30 auf. Dabei ist der Zapfen 30 im Übergangsbereich 44 zusätzlich durch Versteifungsrippen 34 verstärkt. Im Inneren des Hohlprofils 40 befindet sich zur Versteifung desselben ein weiterer innerer Steg 56, wie im Schnitt in Figur 6b gezeigt ist. Bei diesem Ausführungsbeispiel können auch höhere radiale Kräfte bei der Materialumformung zur Befestigung des Zapfens 30 am Träger 10 aufgewendet werden, ohne dass sich dabei das Hohlprofil 40 des Zapfens 30 verformt. Der Steg 56 besitzt vorzugsweise dieselbe Wandstärke 54, wie die seitlichen parallelen Stege 60, 62 oder der Wandstärke 54 des kreisförmigen Hohlprofils 40. Der Steg 56 ist hier senkrecht zur Antriebswelle 18 ausgerichtet, um die erhöhten Kräfte des Wischers im Betrieb aufnehmen zu können.

Die Erfindung ist nicht auf eine bestimmte Form oder einen bestimmten Werkstoff des Hohlprofils 40 beschränkt. Es sind prinzipiell alle Profile mit einem geschlossenen Querschnitt möglich. Die Geometrie wird dabei so gewählt, dass die Wandstärken 54 des Hohlprofils 40 möglichst überall gleichmäßig dick sind. Die Erfindung bezieht sich ebenso auf einzelne Merkmale der verschiedenen Ausführungsbeispiele oder auf eine beliebige Kombination der einzelnen Merkmale der verschiedenen Ausführungsbeispiele.

## Patentansprüche

1. Wischeranlage (8) - insbesondere für Kraftfahrzeuge - mit einem Träger (10), der ein Rohrprofil (26) aufweist, und mindestens einem Wischlagergehäuse (22), das mit einem Zapfen (30) in das Rohrprofil (26) greift, wobei der Zapfen (30) einen Querschnitt aufweist, der als Hohlprofil (40) ausgebildet ist und eine Außenkontur aufweist, die über ihren Umfang kreisförmig ausgebildet ist, **dadurch gekennzeichnet, dass** der Zapfen (30) eine Oberfläche aufweist, an der äußere Stege (58) ausgebildet sind, zwischen die mittels Materialumformung Material (32) des Trägers (10) eingedrückt ist, und das Hohlprofil (40) im Inneren mindestens zwei in etwa parallele Seitenwände (60, 62) aufweist.

2. Wischeranlage (8) nach Anspruch 1, **dadurch gekennzeichnet, dass** das Material (32) des Trägerrohrs mittels Vercrimpen zwischen die äußeren Stege (58) eingedrückt ist.

3. Wischeranlage (8) nach Anspruch 1 oder 2, **dadurch gekennzeichnet, dass** das Hohlprofil (40) im Inneren näherungsweise rechteckig mit zwei längeren parallelen Seitenwänden (60) und zwei kürzeren parallelen Seitenwänden (62) ausgebildet ist.

4. Wischeranlage (8) nach Anspruch 4, **dadurch gekennzeichnet, dass** die in etwa parallele Seitenwände (60, 62) des Hohlprofils (40) parallel zur Achse (21) des Wischerlagergehäuses (22) angeordnet sind.

5. Wischeranlage (8) nach einem der vorhergehenden Ansprüche, **dadurch gekennzeichnet, dass** das Hohlprofil (40) im Inneren mindestens einen inneren Steg (56) aufweist.

6. Wischeranlage (8) nach einem der vorhergehenden Ansprüche, **dadurch gekennzeichnet, dass** das Wischerlagergehäuse (22) einteilig, insbesondere aus unverstärktem Kunststoff geformt ist.

7. Wischeranlage (8) nach einem der vorhergehenden Ansprüche, **dadurch gekennzeichnet, dass** das Wischerlagergehäuse (22) aus POM-Kunststoff gefertigt ist, der eine direkte Lagerung für den Wischer bildet.

8. Wischeranlage (8) nach einem der vorhergehenden Ansprüche, **dadurch gekennzeichnet, dass** in das Hohlprofil (40) des Zapfens (30) ein Verstärkungselement (70) - insbesondere im Bereich, wo der Zapfen (30) aus dem Rohrprofil (26) austritt - montierbar ist.

9. Wischeranlage (8) nach Anspruch 10, **dadurch gekennzeichnet, dass** das Verstärkungselement (70) in das Hohlprofil (40) - insbesondere durch die Materialumformung des Rohrprofils (26) des Trägers (10) - eingepresst ist.

10. Verfahren zur Herstellung von Wischeranlagen (8) nach einem der vorhergehenden Ansprüche, **dadurch gekennzeichnet, dass** bei der Herstellung von Wischerlagergehäusen (22) mit unterschiedlichen Hohlprofilen (40) die Oberfläche des Zapfens (30) - insbesondere die Anordnung und Höhe der äußeren Stege (58) - immer gleich ausgebildet wird, so dass die unterschiedlichen Ausführungsformen des Wischerlagergehäuses (22) mit gleich bleibendem Materialumform-Verfahren im Träger montiert werden können.

## Claims

1. Wiper unit (8) - in particular for motor vehicles - with a support (10) which has a tubular profile (26), and with at least one wiper bearing housing (22) which reaches with a pin (30) into the tubular profile (26), the pin (30) having a cross section which is designed as a hollow profile (40) and has an outer contour which is of circular design over its circumference, **characterized in that** the pin (30) has a surface on which outer webs (58) are formed, between which material (32) of the support (10) is pressed by means of material deformation, and the hollow profile (40) has, in the interior, at least two approximately parallel side walls (60, 62).

2. Wiper unit (8) according to Claim 1, **characterized in that** the material (32) of the support tube is pressed between the outer webs (58) by means of crimping.

3. Wiper unit (8) according to Claim 1 or 2, **characterized in that** the hollow profile (40) is of approximately rectangular design in the interior with two longer parallel side walls (60) and two shorter parallel side walls (62).

4. Wiper unit (8) according to Claim 3, **characterized in that** the approximately parallel side walls (60, 62) of the hollow profile (40) are arranged parallel to the axis (21) of the wiper bearing housing (22).

5. Wiper unit (8) according to one of the preceding claims, **characterized in that** the hollow profile (40) has, in the interior, at least one inner web (56).

6. Wiper unit (8) according to one of the preceding claims, **characterized in that** the wiper bearing housing (22) is formed as a single part, in particular from unreinforced plastic.

7. Wiper unit (8) according to one of the preceding claims, **characterized in that** the wiper bearing housing (22) is manufactured from POM plastic which forms a direct mounting for the wiper.

8. Wiper unit (8) according to one of the preceding claims, **characterized in that** a reinforcing element (70) can be fitted into the hollow profile (40) of the pin (30) - in particular in the region where the pin (30) emerges from the tubular profile (26).

9. Wiper unit (8) according to Claim 8, **characterized in that** the reinforcing element (70) is pressed into the hollow profile (40) - in particular by the material deformation of the tubular profile (26) of the support (10).

10. Method for producing wiper units (8) according to one of the preceding claims, **characterized in that** in the production of wiper bearing housings (22) with different hollow profiles (40) the surface of the pin (30) - in particular the arrangement and height of the outer webs (58) - is always of identical design, so that the different embodiments of the wiper bearing housing (22) can be fitted in the support with the material-deforming method remaining the same.

## Revendications

1. Installation d'essuie-glace (8) (notamment pour véhicule automobile) comportant un support (10) muni d'un profil tubulaire (26) et d'au moins un boîtier de palier d'essuie-glace (22) venant dans le profil tubulaire (26) par un bouchon (30),
le bouchon (30) ayant une section en forme de profil creux (40) dont le contour extérieur est circulaire,
**caractérisée en ce que**
la surface du bouchon (30) est munie de nervures (58) en saillie entre lesquelles est enfoncée la matière du support (10) par déformation de matière et l'intérieur du profil creux (40) comporte au moins deux parois latérales (60, 62) sensiblement parallèles.

2. Installation d'essuie-glace (8) selon la revendication 1,
**caractérisée en ce que**
la matière (32) du support tubulaire est enfoncée entre les nervures extérieures (58) par sertissage.

3. Installation d'essuie-glace (8) selon la revendication 1 ou 2,
**caractérisée en ce que**
l'intérieur du profil creux (40) est sensiblement rectangulaire avec deux parois latérales (60) longues, parallèles, et deux parois latérales (62) courtes, parallèles.

4. Installation d'essuie-glace (8) selon la revendication 3,
**caractérisée en ce que**
les parois latérales (60, 62) sensiblement parallèles du profil creux (40) sont parallèles à l'axe (21) du boîtier de palier d'essuie-glace (22).

5. Installation d'essuie-glace (8) selon l'une des revendications précédentes,
**caractérisée en ce que**
le profil creux (40) comporte intérieurement au moins une nervure intérieure (56).

6. Installation d'essuie-glace (8) selon l'une des revendications précédentes,
**caractérisée en ce que**
le boîtier de palier d'essuie-glace (22) est réalisé en une seule pièce, notamment en matière plastique non renforcée.

7. Installation d'essuie-glace (8) selon l'une des revendications précédentes,
**caractérisée en ce que**
le boîtier de palier d'essuie-glace (22) est en matière plastique POM formant directement le palier pour l'essuie-glace.

8. Installation d'essuie-glace (8) selon l'une des revendications précédentes,
**caractérisée en ce que**
le profil creux (40) du bouchon (30) reçoit un élément de renforcement (70) (notamment dans la zone où le bouchon (30) sort du profil creux (26)).

9. Installation d'essuie-glace (8) selon la revendication 10,
**caractérisée en ce que**
l'élément de renforcement (70) est enfoncé de force dans le profil creux (40), notamment par déformation de la matière du profil creux (26) du support (10).

10. Procédé de fabrication d'installations d'essuie-glace (8) selon l'une des revendications précédentes,
**caractérisé en ce que**
lors de la fabrication des boîtiers d'essuie-glace (22) avec des profils creux (40) différents, on forme la surface extérieure du bouchon (30), notamment la disposition et la répartition des nervures extérieures (58) toujours de façon identique pour que les différentes formes de réalisation du boîtier de palier d'essuie-glace (22) puissent toujours être installées dans le support par le même procédé de transformation de matière.
